# FASCICULE DE BREVET EUROPEEN

(11) **EP 2 511 139 B1**
(45) Date de publication et mention de la délivrance du brevet: **04.06.2014**
(21) Numéro de dépôt: 12163725.0
(22) Date de dépôt: 11.04.2012
(51) Int. Cl.: B60R 5/04

(54) **Dispositif de masquage arrière de vehicule automobile, et procédé de montage associé**
Laderaumabdeckung für Kraftfahrzeug und entsprechendes Montageverfahren
Vehicle rear load compartment cover and associated assembly method

(30) Priorité: 15.04.2011 FR 1153284
(43) Date de publication de la demande: 17.10.2012
(73) Titulaire: Faurecia Automotive Industrie, 92000 Nanterre (FR)
(72) Inventeur: Bryl, Bruno, 08000 La Francheville (FR)
(74) Mandataire: Domenego, Bertrand

(56) Documents cités:
- DE-A1- 19 711 818
- DE-U1-202005 019 371
- DE-U1-202009 004 736
- FR-A1- 2 581 584
- FR-A1- 2 940 942
- JP-A- 2004 074 965

## Description

La présente invention concerne un dispositif de masquage arrière de véhicule automobile, du type comprenant :
- une tablette de support d'objet, destinée à être montée mobile dans le véhicule, la tablette présentant une surface supérieure et une surface inférieure, la tablette délimitant un orifice d'ancrage ménagé dans son épaisseur, l'orifice d'ancrage débouchant au moins dans l'une de la surface supérieure et de la surface inférieure ; le dispositif comportant :
- un élément de liaison entre la tablette et un ouvrant du véhicule, l'élément de liaison comprenant une ancre fixée dans l'orifice d'ancrage et un lien s'étendant entre l'ancre et une extrémité libre.

Un tel dispositif est destiné à être monté dans le coffre d'un véhicule automobile pour masquer le contenu de la partie inférieure du coffre, tout en offrant une surface de support pour des objets destinés à être posés sur la tablette.

De manière connue, la tablette d'un tel dispositif est montée pivotante autour d'un axe transversal du véhicule automobile. Des liens souples raccordent une surface arrière de la tablette au hayon du véhicule automobile pour provoquer le soulèvement de la tablette lors de l'ouverture du hayon. Un tel dispositif de masquage est décrit par exemple dans JP 2004-74965.

Pour fixer les liens souples sur la tablette, il est connu de rapporter une ancre de retenue sur une extrémité du lien. L'ancre est introduite dans un orifice ménagé dans la tablette. Dans JP 2004-74 965, l'ancre est fixée par une rondelle de retenue qui s'appuie sur la surface inférieure de la tablette.

Un tel dispositif ne donne pas entière satisfaction. En effet, les ancres utilisées dans ce dispositif sortent du volume de la tablette et présentent généralement des surfaces anguleuses agressives. Ces ancres sont en outre fixées par le dessus de la tablette, de sorte que le cordon peut être dans le mauvais sens lors du montage de la tablette dans le véhicule.

Par suite, lorsque les tablettes sont produites en série, des précautions importantes doivent être prises pour empiler les tablettes les unes sur les autres, afin d'éviter que l'ancre d'une tablette abime la surface supérieure d'une autre tablette sur laquelle elle est empilée. Ceci est particulièrement le cas pour les tablettes relativement plates et/ou sans axe.

Un but de l'invention est donc d'obtenir un dispositif de masquage arrière de véhicule automobile qui permette une production et un stockage en grandes séries, tout en assurant une qualité de fabrication optimale.

A cet effet, l'invention a pour objet un dispositif du type précité, **caractérisé en ce que** l'ancre est totalement contenue dans l'orifice d'ancrage, sans faire saillie au-delà de la surface supérieure et de la surface inférieure.

Le dispositif selon l'invention peut comprendre l'une ou plusieurs des caractéristiques suivantes, prise(s) isolément ou suivant toutes combinaisons techniquement possibles :
- l'orifice d'ancrage traverse la tablette pour déboucher dans la surface supérieure et dans la surface inférieure.
- une surface supérieure de l'ancre est disposée en retrait ou affleurante par rapport à la surface supérieure de la tablette, une surface inférieure de l'ancre étant disposée en retrait ou affleurante par rapport à la surface inférieure de la tablette ;
- la tablette comporte une lèvre de retenue de l'ancre, faisant saillie dans l'orifice d'ancrage, l'ancre étant montée en appui sur la lèvre ;
- l'élément de liaison comporte au moins un organe rigide agencé autour du lien à l'écart de l'ancre, l'organe rigide présentant une section transversale extérieure inférieure à la section transversale intérieure minimale de l'orifice d'ancrage ;
- le lien forme une boucle à son extrémité libre ;
- le lien comporte une extrémité liée à l'ancre, l'extrémité liée étant noyée dans l'ancre ;

L'invention a également pour objet un ensemble arrière de véhicule automobile du type comprenant :
- au moins une paroi formée avantageusement par un garnissage latéral de véhicule automobile ; et
- un dispositif de masquage arrière tel que défini plus haut, la tablette étant montée rotative sur la paroi autour d'un axe de pivotement;
- un ouvrant mobile par rapport à la paroi, l'élément de liaison étant fixé sur l'ouvrant.

L'invention a aussi pour objet un procédé de montage d'un dispositif de masquage arrière de véhicule automobile, **caractérisé en ce qu'**il comporte les étapes suivantes :
- fourniture d'une tablette de support d'objet, destinée à être montée mobile dans le véhicule, la tablette présentant une surface supérieure et une surface inférieure, la tablette délimitant un orifice d'ancrage ménagé dans son épaisseur, l'orifice d'ancrage débouchant au moins dans l'une de la surface supérieure et de la surface inférieure ;
- fixation d'un élément de liaison dans l'orifice d'ancrage, l'élément de liaison comprenant une ancre fixée dans l'orifice d'ancrage, et un lien s'étendant entre l'ancre et une extrémité libre,
- l'ancre étant totalement contenue dans l'orifice d'ancrage sans faire saillie au-delà de la surface supérieure et de la surface inférieure après l'étape de fixation.

Le procédé de montage selon l'invention peut comprendre la caractéristique suivante :
- l'orifice d'ancrage traverse la tablette, le procédé comprenant l'engagement de la ligne souple à travers l'orifice d'ancrage depuis la surface inférieure vers la surface supérieure ; puis l'introduction de l'ancre dans l'orifice d'ancrage depuis la surface inférieure vers la surface supérieure.

L'invention sera mieux comprise à la lecture de la description qui va suivre, donnée uniquement à titre d'exemple, et faite en se référant aux dessins annexés, sur lesquels :
- la figure 1 est une vue schématique de côté d'un ensemble arrière de véhicule automobile comprenant un premier dispositif selon l'invention ;
- la figure 2 est une vue schématique en coupe suivant un plan vertical des parties pertinentes du dispositif de la figure 1 ; et
- les Figures 3 à 5 sont des vues analogues à la Figure 2 illustrant des variantes de dispositifs selon l'invention.

Dans tout ce qui suit, les orientations sont les orientations habituelles d'un véhicule automobile. Ainsi, les termes « supérieur », « inférieur » « gauche », « droit », « au-dessus », « en-dessous » s'entendent généralement par rapport au sens normal de circulation du véhicule automobile et à la position d'un conducteur.

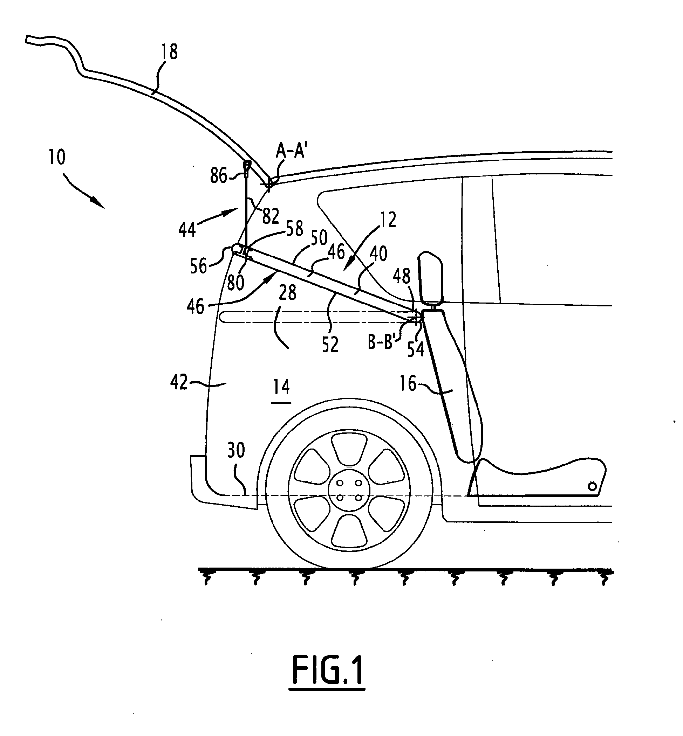

Les Figures 1 à 2 illustrent un premier ensemble arrière 10 de véhicule automobile, muni d'un dispositif de masquage 12 selon l'invention.

L'ensemble arrière 10 définit le coffre arrière 14 du véhicule automobile. De manière connue, le coffre 14 est délimité à l'avant par un siège 16, et est délimité à l'arrière par un hayon mobile 18. Le coffre 14 est délimité latéralement par des garnissages 28 et vers le bas, par un plancher 30.

Le hayon 18 est généralement articulé autour d'un axe horizontal A-A' entre une position fermée, dans laquelle il obture le coffre 14 vers l'arrière et une position ouverte, dans laquelle le hayon 18 a été soulevé vers l'arrière et vers le haut pour libérer un accès au coffre 14 depuis l'arrière du véhicule.

Dans ce mode de réalisation, le dispositif de masquage 12 comporte un panneau formé d'une tablette 40 destinée à obturer une partie inférieure 42 du coffre 14 vers le haut, et destinée à supporter des objets.

Le dispositif 12 comporte en outre un élément de liaison 44 raccordant la tablette 40 à un ouvrant du véhicule formé par le hayon 18.

Dans cet exemple, la tablette 40 est montée rotative autour d'un axe B-B' horizontal parallèle à l'axe A-A'. Elle comporte un corps plat 46 et des organes d'articulation 48 sur les garnissages latéraux 28.

Le corps 46 s'étend sensiblement dans un plan horizontal lorsque le hayon 18 est fermé.

Le corps 46 présente une surface supérieure 50 sensiblement plane et une surface inférieure 52 sensiblement plane et parallèle à la surface supérieure 50.

Les surfaces 50, 52 s'étendent longitudinalement entre un bord avant 54 et un bord arrière 56.

Dans cet exemple, le corps 46 est sensiblement dépourvu de relief. Il est en particulier dépourvu de nervures ou de bords tombés qui font saillie par rapport au corps 46.

L'épaisseur du corps 46 est relativement faible par rapport à ses dimensions. Ainsi, le corps 46 de la tablette présente avantageusement une épaisseur inférieure à 4 mm, et est par exemple comprise entre 2 mm et 4 mm.

Le corps 46 est suffisamment rigide pour supporter sans déformation des objets de masse non négligeable par exemple de masse supérieure à 100 g et plus généralement de masse comprise entre 0 g à 50 kg en fonction de la structure de la tablette.

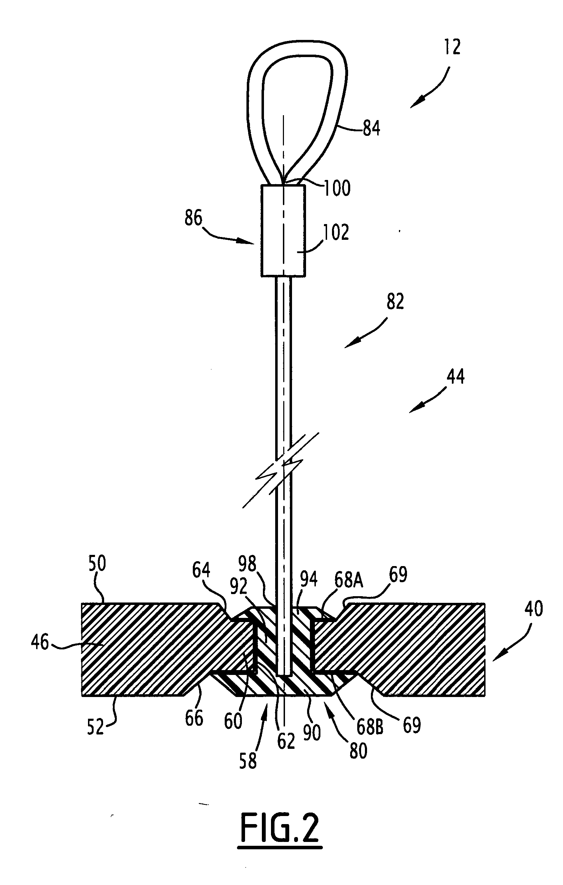

Comme illustré par la Figure 2, le corps 46 de la tablette délimite, au voisinage de son bord arrière 56, un orifice 58 d'ancrage d'axe vertical A-A' pour chaque élément de liaison 44.

L'orifice 58 est traversant pour déboucher dans la surface supérieure 50 et dans la surface inférieure 52.

Le corps 46 comporte une lèvre 60 disposée dans l'orifice d'ancrage 58 pour retenir l'élément de liaison 44. La lèvre 60 s'étend angulairement avantageusement sur toute la périphérie de l'orifice 58.

La lèvre 60 présente une épaisseur inférieure à celle du corps 46. Elle délimite un passage central 62 d'axe A-A', et au-dessus et en-dessous du passage central 62 une cuvette supérieure 64 et une cuvette inférieure 66.

Chacune des cuvettes 64, 66 définit une surface d'appui respective 68A, 68B, disposée dans l'orifice d'ancrage 58.

Chaque surface d'appui 68A, 68B s'étend parallèlement et en retrait axialement par rapport respectivement à la surface supérieure 50 et à surface inférieure 52 du corps 46.

Chaque surface d'appui 68A, 68B est raccordée respectivement à la surface supérieure 50 et à la surface inférieure 52 par une surface 69 en forme de biseau.

Dans l'exemple représenté sur les figures, les organes 48 d'articulation de la tablette 40 sont formés par des reliefs faisant saillie latéralement par rapport aux bords latéraux du corps, au voisinage du coin avant gauche et du coin avant droit de la tablette 40.

Dans une variante avantageuse, la tablette 40 est une tablette dite « sans axe », c'est-à-dire que les reliefs sont venus de matière avec le corps 46 de la tablette et ne dépassent pas au-delà du bord latéral du corps 46 ou dépassent de quelques millimètres Les reliefs sont en outre contenus dans l'épaisseur de la tablette, de sorte qu'ils ne dépassent pas au-dessus de la surface supérieure 50, ou en-dessous de la surface inférieure 52.

Les organes d'articulation 48 sont reçus dans des gorges de dimensions correspondantes ménagées dans les garnissages latéraux 28 en regard.

La tablette 40 est ainsi montée rotative autour de l'axe horizontal B-B' entre une position de repos sensiblement horizontale, dans laquelle elle est disposée en appui sur un appui arrière du garnissage 28 et une position soulevée vers le haut, inclinée par rapport à l'horizontal pour permettre un accès à la partie inférieure 42 du coffre 14.

Dans l'exemple représenté sur la Figure 1, le dispositif de masquage 12 comporte au moins un ensemble de liaison 44 raccordant la tablette 40 au hayon 18. De préférence, le dispositif 12 comporte deux ensembles de liaison 44 disposés respectivement à gauche et à droite de la tablette 40.

Chaque ensemble de liaison 44 comporte une ancre 80 montée fixe dans la tablette 40 et un lien filiforme souple 82 raccordant l'ancre 80 au hayon 18.

Dans la variante représentée sur la Figure 2, le lien souple 82 est replié en boucle 84 à son extrémité libre et l'ensemble de liaison 44 comporte un fixe boucle 86.

Comme illustré par la Figure 2, l'ancre 80 est engagée dans l'orifice d'ancrage 58. Selon l'invention, l'ancre 80 est totalement contenue dans l'orifice d'ancrage 58, sans faire saillie au-delà de la surface supérieure 50 et au-delà de la surface inférieure 52. Ainsi, la hauteur de l'ancre 80, prise le long de l'axe A-A' est inférieure ou égale à l'épaisseur de la tablette 40, prise entre la surface supérieure 50 et la surface inférieure 52 le long de l'axe A-A'.

Dans cet exemple, l'ancre 80 comporte une tête inférieure 90 définissant une surface inférieure de l'ancre 80, un corps intermédiaire 92 et une bride de retenue 94 définissant une surface supérieure de l'ancre 80.

La tête 90 est disposée en appui contre la surface d'appui inférieure 68B dans la cuvette inférieure 66.

Le corps intermédiaire 92 est reçu dans le passage central 62. Il présente une section transversale sensiblement conjuguée à la section transversale du passage 62.

La bride 94 fait saillie radialement à partir du corps intermédiaire 92. Elle est disposée en appui sur la surface d'appui supérieure 68A en étant reçue dans la cuvette supérieure 64. La bride 94 est déformable radialement entre une configuration rétractée sur le corps 92 pour son introduction dans l'orifice 58, et une configuration dilatée de retenue.

Lorsque l'ancre 80 est reçue dans l'orifice 58, la tête 90 est totalement contenue dans la cuvette 66, alors que la bride 94 est totalement contenue dans la cuvette supérieure 64.

La lèvre 60 est ainsi enserrée axialement vers le haut par la bride 94 et vers le bas par la tête 90.

L'ancre 80 est ainsi fixe axialement le long de l'axe A-A' dans l'orifice 58.

Le lien filiforme 82 est formé par un cordon présentant une première extrémité 98 lié à l'ancre 80 et une deuxième extrémité 100 repliée en forme de boucle 84.

L'extrémité liée 98 est noyée dans l'ancre 80, en étant reçue dans un orifice borgne délimité par le corps 92.

Le fixe boucle 86 maintient liés entre eux l'extrémité libre 100 du lien 82 et un point intermédiaire du lien 82. Il est formé par un corps allongé 102 de section transversale inférieure à la section transversale minimale de l'orifice 68.

Le lien filiforme 82 est souple pour être déformé lors de l'ouverture et de la fermeture du hayon 18, entre une configuration tendue de soulèvement de la tablette et une configuration de repos.

Le montage du dispositif de masquage 12 selon l'invention, lors de sa fabrication va maintenant être décrit.

Initialement, la tablette 40 est fabriquée en ménageant au moins un orifice d'ancrage 58 traversant le corps 46 entre sa surface inférieure 52 et sa surface supérieure 50.

De même, chaque ensemble de liaison 44 est réalisé. A cet effet, l'ancre 80 est moulée pour noyer l'extrémité liée 98 du lien souple 82. L'extrémité libre 100 du lien souple 82 est disposée dans le fixe boucle 86 pour former une boucle 84.

Puis, l'assemblage du dispositif 12 est réalisé. A cet effet, l'ensemble de liaison 44 est introduit à travers l'orifice d'ancrage 58 depuis la surface inférieure 52 vers la surface supérieure 50.

L'ensemble de liaison 44 est tout d'abord introduit dans l'orifice 58 en faisant passer successivement la boucle 84, le fixe boucle 86 et le reste du lien filiforme 82.

Puis, l'ancre 80 est introduite en force dans l'orifice d'ancrage 58. La bride de retenue 94 est déformée dans sa configuration rétractée pour passer successivement dans la cuvette inférieure 66, dans le passage central 62 et pour ressortir dans la cuvette supérieure 64.

La bride 94 se déploie dans sa configuration déployée et s'applique alors sur la surface d'appui supérieure 68A.

La tête inférieure 90 bute contre la surface inférieure d'appui 68B. L'ancre 90 est alors fixée axialement dans l'orifice 58, sans dépasser en dehors de l'orifice 58.

Le lien 82 peut alors être replié contre la surface supérieure 50 de la tablette.

L'ancre 80 étant totalement contenue dans l'orifice 58, aucune partie saillante ou anguleuse ne dépasse hors de l'orifice 58. Par suite, une pluralité de tablettes 40 peuvent être empilées les unes sur les autres en limitant le risque de dégradation de la qualité des tablettes 40 par rayure ou par griffure. Il est ainsi possible de produire et de stocker facilement un grand nombre de dispositifs de masquage 12, ce qui contribue à réduire les coûts de fabrication, ainsi que les coûts de transport.

De plus, l'ancre 80 est directement montée dans le bon sens dans la tablette 40, ce qui simplifie le montage.

Lors de l'installation du dispositif 12 dans le coffre 14 d'un véhicule automobile, les organes 48 d'articulation de la tablette 40 sont insérés dans les garnissages 28. La tablette 40 est posée en position horizontale contre les appuis à l'arrière des garnissages 28.

Puis, l'extrémité libre 100 des liens filiformes 82 est fixée sur le hayon 18, ce qui fait pivoter la tablette 40 vers le haut.

Lorsque le hayon 18 est refermé, la tablette 40 reprend sa position horizontale et est soulevée par l'intermédiaire de l'ensemble de liaison lorsque le hayon 44 est ouvert.

Dans une variante, le lien 82 n'est pas un lien souple, mais un lien rigide autoporteur.

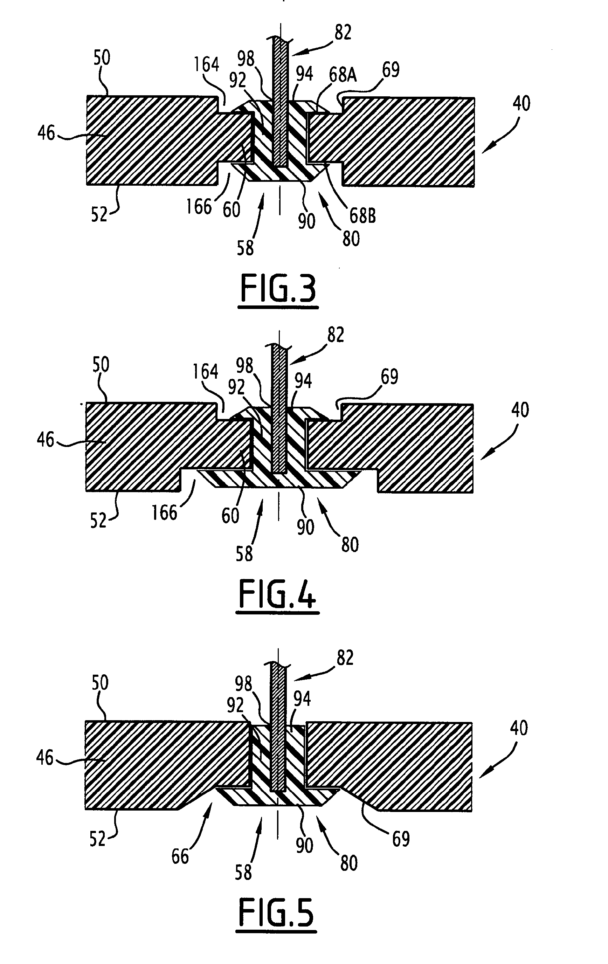

Dans une autre variante, représentée sur les Figures 3 et 4, la surface de liaison 69 n'est pas en forme de biseau, mais est orthogonale à la surface supérieure 50, à la surface inférieure 52 et aux surfaces d'appui 68A, 68B.

La lèvre 60 délimite alors une gorge supérieure 164 et une gorge inférieure 166 respectivement au dessous et au dessus des surfaces d'appui 68A, 68B.

La section transversale de la gorge inférieure 166 est sensiblement égale à celle de la gorge supérieure sur la Figure 3, alors que sur la Figure 4, la section transversale de la gorge inférieure 166 est supérieure à celle de la gorge supérieure 164.

Dans le mode de réalisation de la Figure 5, l'ancre 80 est dépourvue de bride supérieure de retenue 94.

Le corps 92 de l'ancre 80 est inséré en force dans le passage central 62 de l'orifice d'ancrage 58 pour enserrer l'extrémité libre 98 du lien 82.

A cet effet, le corps 92 est réalisé en un matériau relativement souple pour être comprimé radialement par le corps 46 de la tablette 40.

## Revendications

1. Dispositif (12) de masquage arrière de véhicule automobile, du type comprenant :
- une tablette (40) de support d'objet, destinée à être montée mobile dans le véhicule, la tablette (40) présentant une surface supérieure (50) et une surface inférieure (52), la tablette (40) délimitant un orifice d'ancrage (58) ménagé dans son épaisseur, l'orifice d'ancrage (58) débouchant au moins dans l'une de la surface supérieure (50) et de la surface inférieure (52) ; le dispositif comportant :
- un élément (44) de liaison entre la tablette (40) et un ouvrant du véhicule, l'élément de liaison (44) comprenant une ancre (80) fixée dans l'orifice d'ancrage (58) et un lien (82) s'étendant entre l'ancre (80) et une extrémité libre (100) ;
**caractérisé en ce que** l'ancre (80) est totalement contenue dans l'orifice d'ancrage (58), sans faire saillie au-delà de la surface supérieure (50) et de la surface inférieure (52).

2. Dispositif (12) selon la revendication 1, **caractérisé en ce que** l'orifice d'ancrage (58) traverse la tablette (40) pour déboucher dans la surface supérieure (50) et dans la surface inférieure (52).

3. Dispositif (12) selon l'une des revendications 1 ou 2, **caractérisé en ce qu'**une surface supérieure de l'ancre (80) est disposée en retrait ou affleurante par rapport à la surface supérieure (50) de la tablette (40), une surface inférieure de l'ancre (80) étant disposée en retrait ou affleurante par rapport à la surface inférieure (52) de la tablette (40).

4. Dispositif (12) selon l'une quelconque des revendications précédentes, **caractérisé en ce que** la tablette (40) comporte une lèvre (60) de retenue de l'ancre (80), faisant saillie dans l'orifice d'ancrage (58), l'ancre (80) étant montée en appui sur la lèvre (60).

5. Dispositif (12) selon l'une quelconque des revendications précédentes, **caractérisé en ce que** l'élément de liaison (44) comporte au moins un organe rigide (86) agencé autour du lien (82) à l'écart de l'ancre (80), l'organe rigide (86) présentant une section transversale extérieure inférieure à la section transversale intérieure minimale de l'orifice d'ancrage (58).

6. Dispositif (12) selon l'une quelconque des revendications précédentes, **caractérisé en ce que** le lien (82) forme une boucle (84) à son extrémité libre (100).

7. Dispositif (12) selon l'une quelconque des revendications précédentes, **caractérisé en ce que** le lien (82) comporte une extrémité (98) liée à l'ancre (80), l'extrémité liée (98) étant noyée dans l'ancre (80).

8. Ensemble arrière (10) de véhicule automobile du type comprenant :
- au moins une paroi formée avantageusement par un garnissage (28) latéral de véhicule automobile ; et
- un dispositif (12) de masquage arrière selon l'une quelconque des revendications précédentes, la tablette (40) étant montée rotative sur la paroi autour d'un axe (A-B') de pivotement;
- un ouvrant mobile par rapport à la paroi, l'élément de liaison (44) étant fixé sur l'ouvrant.

9. Procédé de montage d'un dispositif (12) de masquage arrière de véhicule automobile, **caractérisé en ce qu'**il comporte les étapes suivantes :
- fourniture d'une tablette (40) de support d'objet, destinée à être montée mobile dans le véhicule, la tablette (40) présentant une surface supérieure (50) et une surface inférieure (52), la tablette (40) délimitant un orifice d'ancrage (58) ménagé dans son épaisseur, l'orifice d'ancrage (58) débouchant au moins dans l'une de la surface supérieure (50) et de la surface inférieure (52) ;
- fixation d'un élément de liaison (44) dans l'orifice d'ancrage (58), l'élément de liaison (44) comprenant une ancre (80) fixée dans l'orifice d'ancrage (58), et un lien (82) s'étendant entre l'ancre (80) et une extrémité libre (100),
l'ancre (80) étant totalement contenue dans l'orifice d'ancrage (58) sans faire saillie au-delà de la surface supérieure (50) et de la surface inférieure (52) après l'étape de fixation.

10. Procédé selon la revendication 9, **caractérisé en ce que** l'orifice d'ancrage (58) traverse la tablette (40), le procédé comprenant l'engagement de la ligne souple (82) à travers l'orifice d'ancrage (58) depuis la surface inférieure (52) vers la surface supérieure (50) ; puis l'introduction de l'ancre dans l'orifice d'ancrage (58) depuis la surface inférieure (52) vers la surface supérieure (50).

## Patentansprüche

1. Vorrichtung (12) zur Heckabdeckung eines Kraftfahrzeugs, des Typs, der aufweist:
- eine Objekttrageplatte (40), die vorgesehen ist, um bewegbar im Fahrzeug montiert zu sein, wobei die Platte (40) eine obere Fläche (50) und eine untere Fläche (52) aufweist, wobei die Platte (40) eine Verankerungsöffnung (58) begrenzt, die in ihrer Dicke ausgebildet ist, wobei die Verankerungsöffnung (58) mindestens in eine von der oberen Fläche (50) und der unteren Fläche (52) mündet, wobei die Vorrichtung aufweist:
- ein Verbindungselement (44) zwischen der Platte (40) und einer Heckklappe des Fahrzeugs, wobei das Verbindungselement (44) einen Anker (80), der in der Verankerungsöffnung (58) befestigt ist, und eine Verbindung (82), die sich zwischen dem Anker (80) und einem freien Ende (100) erstreckt, aufweist,
**dadurch gekennzeichnet, dass** der Anker (80) vollständig in der Verankerungsöffnung (58) enthalten ist, ohne über die obere Fläche (50) und die untere Fläche (52) hinaus hervorzuragen.

2. Vorrichtung (12) gemäß Anspruch 1, **dadurch gekennzeichnet, dass** die Verankerungsöffnung (58) die Platte (40) durchquert, um in die obere Fläche (50) und in die untere Fläche (52) zu münden.

3. Vorrichtung (12) gemäß einem der Ansprüche 1 oder 2, **dadurch gekennzeichnet, dass** eine obere Fläche des Ankers (80) bezüglich der oberen Fläche (50) der Platte (40) vertieft oder bündig angeordnet ist, wobei eine untere Fläche des Ankers (80) bezüglich der unteren Fläche (52) der Platte (40) vertieft oder bündig angeordnet ist.

4. Vorrichtung (12) gemäß irgendeinem der vorhergehenden Ansprüche, **dadurch gekennzeichnet, dass** die Platte (40) eine Lippe (60) zum Halten des Ankers (80) aufweist, die in die Verankerungsöffnung (58) hervorsteht, wobei der Anker (80) an der Lippe (60) abgestützt montiert ist.

5. Vorrichtung (12) gemäß irgendeinem der vorhergehenden Ansprüche, **dadurch gekennzeichnet, dass** das Verbindungselement (44) mindestens ein steifes Element (86) aufweist, das um die Verbindung (82) herum im Abstand von dem Anker (80) angeordnet ist, wobei das steife Element (86) einen äußeren Querschnitt hat, der kleiner als der minimale innere Querschnitt der Verankerungsöffnung (58) ist.

6. Vorrichtung (12) gemäß irgendeinem der vorhergehenden Ansprüche, **dadurch gekennzeichnet, dass** die Verbindung (82) an ihrem freien Ende (100) eine Schlaufe (84) bildet.

7. Vorrichtung (12) gemäß irgendeinem der vorhergehenden Ansprüche, **dadurch gekennzeichnet, dass** die Verbindung (82) ein mit dem Anker (80) verbundenes Ende (98) aufweist, wobei das verbundene Ende (98) in den Anker (80) versenkt ist.

8. Heckeinheit (10) für ein Kraftfahrzeug des Typs, der aufweist:
- mindestens eine Wand, die vorteilhafterweise durch eine Seitenverkleidung (28) des Kraftfahrzeugs ausgebildet ist, und
- eine Heckabdeckungsvorrichtung (12) gemäß irgendeinem der vorhergehenden Ansprüche, wobei die Platte (40) an der Wand um eine Schwenkachse (A-B') schwenkbar montiert ist,
- eine Heckklappe, die bezüglich der Wand bewegbar montiert ist, wobei das Verbindungselement (44) an der Heckklappe befestigt ist.

9. Verfahren zum Montieren einer Heckabdeckungsvorrichtung (12) für ein Kraftfahrzeug, **dadurch gekennzeichnet, dass** es die folgenden Schritte aufweist:
- Bereitstellen einer Objekttrageplatte (40), die vorgesehen ist, um im Fahrzeug bewegbar montiert zu sein, wobei die Platte (40) eine obere Fläche (50) und eine untere Fläche (52) aufweist, wobei die Platte (40) eine Verankerungsöffnung (58) begrenzt, die in ihrer Dicke ausgebildet ist, wobei die Verankerungsöffnung (58) mindestens in eine von der oberen Fläche (50) und der unteren Fläche (52) mündet,
- Befestigen eines Verbindungselements (44) in der Verankerungsöffnung (58), wobei das Verbindungselement (44) aufweist: einen Anker (80), der in der Verankerungsöffnung (58) befestigt ist, und eine Verbindung (82), die sich zwischen dem Anker (80) und einem freien Ende (100) erstreckt,
wobei nach dem Befestigungsschritt der Anker (80) vollständig in der Verankerungsöffnung (58) enthalten ist, ohne über die obere Fläche (50) und die untere Fläche (52) hinaus hervorzuragen.

10. Verfahren gemäß Anspruch 9, **dadurch gekennzeichnet, dass** die Verankerungsöffnung (58) die Platte (40) durchquert, wobei das Verfahren aufweist: Einsetzen der flexiblen Leitung (82) durch die Verankerungsöffnung (58) hindurch von der unteren Fläche (52) aus in Richtung zu der oberen Fläche (50), und anschließend Einführen des Ankers in die Verankerungsöffnung (58) von der unteren Fläche (52) aus in Richtung zu der oberen Fläche (50).

## Claims

1. Rear masking device (12) for a motor vehicle, of the type comprising:
- an object-supporting shelf (40) which is intended to be mounted in a movable manner in the vehicle, said shelf (40) having an upper surface (50) and a lower surface (52) and said shelf (40) delimiting an anchoring orifice (58) arranged within its thickness, said anchoring orifice (58) opening out at least into one or other of the upper surface (50) and lower surface (52); said device comprising:
- a linking element (44) between the shelf (40) and an opening panel of the vehicle, said linking element (44) comprising an anchor (80), which is fixed in the anchoring orifice (58), and a link (82) which extends between said anchor (80) and a free end (100);
**characterised in that** the anchor (80) is totally contained in the anchoring orifice (58) without projecting beyond the upper surface (50) or lower surface (52).

2. Device (12) according to Claim 1, **characterised in that** the anchoring orifice (58) passes through the shelf (40) so as to open out into the upper surface (50) and into the lower surface (52).

3. Device (12) according to either of Claims 1 or 2, **characterised in that** an upper surface of the anchor (80) is disposed in a recessed or flush manner in relation to the upper surface (50) of the shelf (40), a lower surface of said anchor (80) being disposed in a recessed or flush manner in relation to the lower surface (52) of said shelf (40).

4. Device (12) according to any of the preceding claims, **characterised in that** the shelf (40) comprises a lip (60) for retaining the anchor (80), which lip projects into the anchoring orifice (58), said anchor (80) being mounted in a manner resting on said lip (60).

5. Device (12) according to any of the preceding claims, **characterised in that** the linking element (44) comprises at least one rigid component (86) which is arranged around the link (82) at a distance from the anchor (80), said rigid component (86) having an external transverse section which is smaller than the minimum internal transverse section of the anchoring orifice (58).

6. Device (12) according to any of the preceding claims, **characterised in that** the link (82) forms a loop (84) at its free end (100).

7. Device (12) according to any of the preceding claims, **characterised in that** the link (82) comprises an end (98) which is linked to the anchor (80), the linked end (98) being embedded in said anchor (80).

8. Rear motor-vehicle assembly (10) of the type comprising:
- at least one wall which is advantageously formed by a lateral motor-vehicle trim (28); and
- a rear masking device (12) according to any of the preceding claims, the shelf (40) being mounted in a rotating manner on the wall about an axis (A-B') of pivoting;
- an opening panel which is movable in relation to the wall, the linking element (44) being fixed onto said opening panel.

9. Method of mounting a rear masking device (12) for a motor vehicle, **characterised in that** said method comprises the following stages:
- the supplying of an object-supporting shelf (40) which is intended to be mounted in a movable manner in the vehicle, said shelf (40) having an upper surface (50) and a lower surface (52) and said shelf (40) delimiting an anchoring orifice (58) arranged within its thickness, said anchoring orifice (58) opening out at least into one or other of the upper surface (50) and lower surface (52);
- the fixing of a linking element (44) in the anchoring orifice (58), said linking element (44) comprising an anchor (80), which is fixed in the anchoring orifice (58), and a link (82) which extends between said anchor (80) and a free end (100); said anchor (80) being totally contained in the anchoring orifice (58) without projecting beyond the upper surface (50) or lower surface (52) after the fixing stage.

10. Method according to Claim 9, **characterised in that** the anchoring orifice (58) passes through the shelf (40), said method comprising the fitting of the flexible line (82) through the anchoring orifice (58) from the lower surface (52) towards the upper surface (50); and then the introduction of the anchor into the anchoring orifice (58) from said lower surface (52) towards said upper surface (50).
